# EUROPEAN PATENT APPLICATION

(11) **EP 3 388 212 A1**
(43) Date of publication of application: **17.10.2018**
(21) Application number: 18167010.0
(22) Date of filing: 12.04.2018
(51) Int. Cl.: B27K 3/50, B27K 3/52, C09K 21/04

(54) **FIRE INHIBITING LIQUID SURFACE TREATMENT COMPOSITION**

(30) Priority: 12.04.2017 DK PA201770263; 12.04.2017 DK PA201770264
(71) Applicant: Nowocoat Industrial A/S, 6000 Kolding (DK)
(72) Inventor: Reinert, Joen, 6091 Bjert (DK)
(74) Representative: Tellefsen, Jens J.

(57) **Abstract**

Fire inhibiting liquid surface treatment composition for application on substrate surfaces, comprising:
a. 5% to 30% binder;
b. 0,1% to 5% catalyst;
c. the remaining amount water.

## Description

### Field of the Invention

The present invention relates to a fire inhibiting liquid surface treatment composition, a process for impregnating wood with such a composition, as well as a method of applying such a fire inhibiting liquid surface treatment composition to a wood substrate.

### Background of the Invention

In the art of surface treatment, particularly of wood, there is a general desire to provide the surface with improved characteristics in addition to for example a different colour. The surface characteristics may be resistance against attacks from fungus and bacteria which will result in rot, increased durability such that weathering and the side-effects of weathering are reduced providing better durability and longer life for the construction/substrate which has been treated with the surface treatment.

In the art there are numerous surface treatment compositions which provide various improved characteristics to the surface. However, common for the treatment compositions which provide protection against attacks from fungus and bacteria is the fact that they contain biocides which are hazardous to the environment and can and will create pollution to the ambient environment and may seep into groundwater and in that manner end up in our food chain.

As will be evident from the formulation of the fire inhibiting agent the process for impregnating wood as well as the impregnating agent are free from biocides and as such are very environment friendly.

It is a relatively new technology to chemically modify wood within the technical field of wood preserving. The technology aims at protecting the wood against deterioration, particularly from attacks from insects and fungus or other biological detrimental effects as well as to improve the characteristics of the wood at the same time. By improving the wood characteristics is understood that the wood after treatment will have a more stable shape, i.e. dimensions will be more constant, the compressive strength will increase and the surface hardness will likewise increase.

Furthermore, resistance against weathering and the degradation due to UV rays from the sun shall also be minimized. In order to achieve this a host of various chemicals and processes has been attempted in order to achieve the above goals. Among these processes is acetylation which refers to a process of introducing an acetyl group into a compound, for example by substituting an acetyl group for an active hydrogen atom. Other attempts are treatments with aldehydes and/or ketones, however, none of these methods have achieved the above goals to a satisfying extent and/or within economically feasible processes.

### Object of the Invention

Consequently, there is a need to provide a surface treatment which does not contain hazardous substances such as for example biocides.

It is therefore an object of the present invention to provide an improved and biocide free impregnating agent which in addition to improving the physical properties of the substrate also provides added resistance against biological attacks from fungus and bacteria, and furthermore also provides fire resistance to the substrate.

### Description of the Invention

The present invention addresses this by providing a fire inhibiting liquid surface treatment composition for application on substrate surfaces comprising
a. 5% to 30% binder;
b. 0,1% to 15% catalyst;
c. the remaining amount water.

As is evident from the composition the various ranges of the components a and b do not add up to 100% and therefore the remaining percentages are provided by adding water. In this manner a liquid surface treatment composition is achieved where the flowability provides for very easy application as will be discussed below with reference to the inventive method.

In general throughout this description and appended claims, if nothing else is clearly identified "%" shall be understood as "weight-%".

In addition to providing resistance/protection against attacks from fungus and bacteria due to the provision of the binder, the inventive liquid also provides resistance against fire by the content of the catalyst being a fire inhibiting agent where the catalyst for at least 50% of its content is in the shape of diammonium phosphate (DAP) which will severely quell the fire's ability to spread and feed on the substrate.

DAP is used as a fire retardant. It lowers the combustion temperature of the material thereby decreasing maximum weight loss rates, and causes an increase in the production of residue or char. These are important effects as lowering of the pyrolysis temperature and increasing the amount of char formed reduce the amount of available fuel (i.e. less wood is available for combustion).

In a further advantageous embodiment the composition is further defined by:
- the binder being DMDHEU (C₅H₁₀N₂O₅);
- the catalyst being at least partly a fire inhibiting agent based mainly on diammonium phosphate (DAP);
and as is evident in further advantageous embodiments where a calciuim carbonate binder is provided, where said calcium binder preferably is Sodium hexametaphosphat
and/or where the catalyst is a mix of DAP and magnesium chloride or a citric acid.

This compound addresses the drawbacks of the prior art and as such achieves the advantageous characteristics which chemically modifying wood aims at achieving.

The DMDHEU binder (1,3-dimethylol-4,5-dihydroxyethyleneurea) is widely used in the textile industry where the compound is used to strengthen the textile fibers. Particularly when used in connection with cotton which has a relatively high content of cellulose fibers the addition of DMDHEU provides a number of advantages. The advantages provided to textiles are particularly anti-wrinkle properties and that the shape of the textile is maintained better due to the higher stiffness which the DMDHEU compound provides.

DMDHEU is a well-known chemical compound and has CAS no. 97123-53-0/1854-26-8.

When the fire inhibiting liquid surface treatment composition is applied, for example to wood, the DMDHEU will chemically connect to the cellulose fibres. This process and the fact that DMDHEU is able to polycondensate have the effect that the water content is reduced and at the same time the DMDHRU fills out the pores and micro pores in the wood structure and in the process strengthens the cell walls. During the hardening the acetyl groups of the cellulose fibres chemically react with DMDHEU during which process water is a bi-product which is removed from the wood.

The remaining water content in the cellulose structure is therefore severely reduced which in turn makes it very difficult for the enzymes of the fungus to recognize the cellulose treated with the DMDHEU as a suitable substrate on which to propagate. Consequently, the likelihood of fungus attacks and the speed of fungus attacks are severely reduced which improves the overall durability and the life-expectancy of the wood to such a degree that a distinguished advantage is obtained. The physical strengthening provided by the DMDHEU by its reaction with the cellulose also reinforces the cell-walls of the cellulose structure and as such provides extra strength and stability to the treated substrate.
When chemically modifying wood a covalent bond is created, typically between the hydroxyl group (OH) and the polymers of the cell walls inside the cellulose, hemicellulose or lignin and an additive, in this case the added compound DMDHEU. This covalent connection with the polymers of the cell walls changes the physical and chemical characteristics of the wood. The cell wall and particularly the micro pores which are present in the cell wall are either filled with or blocked by the addition of this compound (as it reacts with the cellulose). In this manner the strength of the inner walls is increased which increases the dimensional stability of the wood and at the same time lowers the equilibrium moisture content of the wood.

Particularly the water content of the wood is an important factor whether or not particularly fungus will be able to invade the wood structure and thereby over time create rot. By lowering the equilibrium moisture content the water content in the wood is so low that fungus requiring a higher water content than what is present after the modified wood, will not be able to thrive.

DMDHEU is a compound derived from a reaction between urea, formaldehyde and glyoxal. This compound was originally developed in the textile industry in the fifties in order to retain the shape of items of clothing and avoid that they became wrinkled. Furthermore, DMDHEU provides resistance against wear and binds the colouring such that this compound provided a number of advantages in the textile industry. DMDHEU will bind to and strengthen the cellulose fibres of the textile and at the same time the DMDHEU is able to condensate polymers whereby the reaction process sheds bi-products such as water and/or other small molecules.

In the textile industry the impregnating process is typically carried out by "baking" the textiles at a temperature in the range 130°C-180°C. As for example cotton used in the textile industry has a relatively high content of cellulose fibres, the introduction of DMDHEU into the impregnating agent of the present invention, has indicated that a number of advantageous characteristics are obtained, also characteristics which are not traditionally obtained when using the same compound for treatment in the textile industry. The reduction of water content in the wood when being modified with DMDHEU appears partly due to the condensation of polymers where DMDHEU fills out the volume and at the same time sheds the water such that the water content in the wood is substantially lowered.

At the same time the number of free OH is reduced. During the reduction of the OH the DMDHEU compound will harden. After the hardening process these molecules are not available for absorption of water molecules resulting in a lowered water content in the wood. Consequently, as fungus requires a relatively high water content in order to propagate, the conditions for fungus attack are severely lowered, and the life expectancy of the wood is increased. The lowering of the water content inside the wood inhibits the fungus enzymes in recognizing a suitable surface or substrate on which to propagate.

As already mentioned above the impregnating by DMDHEU will close and reinforce the cell walls and particularly the micro pores in the cell walls such that water and nutrients cannot be transported through the cell walls of the wood. At the same time the diameter of the cells will be reduced all to the detriment of the fungus enzymes.

This effect is further fortified in embodiments where also a siloxane is added to the fire inhibiting liquid surface treatment composition. Siloxane will readily integrate with the other components into a homogeneous viscous composition. Siloxane in an amount of 1% to 5% will increase the binding process of the DMDHEU in the wood structure and also counter any washing out of the composition. Furthermore the siloxane will provide an increased sealing of the wood surface, thereby hindering attack from fungus, algae and other biological detrimental influences. The siloxane will also provide water repellency.

A siloxane is a functional group in organosilicon chemistry with the Si-O-Si linkage. The parent siloxanes include the oligomeric and polymeric hybrides with the formulae H(OSiH₂)*ₙ*OH and (OSiH₂)ₙ. Siloxanes also include branched compounds, the defining feature of which is that each pair of silicon centres is separated by one oxygen atom. The siloxane functional group forms the backbone of silicones the premier example of which is polydimethylsiloxane.

A further wood degrading effect is the so-called weathering where wind and in particular the UV rays from the sun have a very negative effect on the surface of the wood and thereby on the durability of the wood. The UV rays will typically break the chemical bonds especially in the lignin part of the wood which thereafter become "loose" such that wind and water, for example from rain, may wash away parts of the wood thereby severely weakening the wood and at the same time opening up the surface of the wood such that it is easier for fungus and bacteria to attack the wood.

The Calcium carbonate binder may for example be Trilon.

In a further advantageous embodiment of the invention the viscosity is adjusted by addition of water, such that the fire inhibiting liquid surface treatment composition may be applied to the substrate surface by one of the following application techniques: flow, by brush or roller, paint gun, airless paint gun, immersion.

Due to the reaction between DMDHEU and the wood substrate as such the moisture content of the wood will only be temporarily elevated due to the added water to the liquid surface treatment composition. During the drying process most of the water will be free water and therefore evaporate and only leave the active ingredients, i.e. the binder, the fire inhibiting agent (DAP) and the calcium carbonate binder.

Furthermore approximately 5% of the DAP will react and fixate the DMDHEU in the wood in the consolidation and strengthening process mentioned above. The rest of the DAP will act as fire inhibiting agent. In the process the DMDHEU reaction will also cause the wood (substrate) to become completely formaldehylde free. As formahylde has proven to be a potential cause of many diseases, the neutralisation of formaldehyde enforces the environmentally friendly nature of the composition according to the invention.

By being able to adjust the viscosity by simply adding water it is possible to apply the liquid surface treatment composition, for example by brush or roller, paint gun, airless paint gun or immersion in a bath of the liquid surface treatment or alternatively by allowing the liquid surface treatment composition to flow across the surface to be treated.

Depending on the quality of the wood and the species of the wood the surface should as set out in a further advantageous embodiment of the invention result in approximately 50-500 grams per square meter of liquid surface treatment composition being applied to the substrate.

In addition to applying the fire inhibiting liquid surface treatment composition as a surface treatment the inventive composition has also shown to be especially effectful when used in an impregnation process. Consequently the invention is also directed at a process for impregnating wood with a fire inhibiting compound as discussed above where said process comprises the following steps:
a. A batch of wood to be treated is inserted in a treatment chamber, where after the treatment chamber is closed;
b. A first under-pressure is established inside the treatment chamber for a first time interval;
c. After the first time interval an impregnating liquid is allowed to enter the treatment chamber, said impregnating liquid covering the wood, and an over-pressure is established, and where said impregnating liquid contains between 5 to 30 weight-% binder and 0,1% to 5% of a catalyst;
d. After a second time interval the impregnating liquid is removed and a second under-pressure is established for the duration of a third time interval;
e. The wood is dried.

The under-pressure established during the first and the second under-pressure intervals used in the process should be in the range on minus 0.1 to minus 1 bar. These underpressures are not very high and as such do not damage the wood or create pressure gradients in the wood which could cause destruction of the wood structure, but are sufficient in order to remove excess liquid from the wood structure thereby making room for the impregnating agent.

The time intervals for the various steps of the process mentioned above are selected such that the first and third time intervals are selected between 1 and 180 minutes. The second time interval is selected to be between 5 and 180 minutes. During the process when shifting from under-pressure to over-pressure by opening the inlet for the impregnating liquid the under-pressure in the treatment chamber will automatically suck in the impregnating liquid such that only a very limited pump action is necessary in order to introduce the liquid into the treatment chamber. The same is also true when the treatment liquid is to be drained out of the treatment chamber by pumping out the treatment liquid and continuing the pumping action, the under-pressure required in the third time interval will be established.

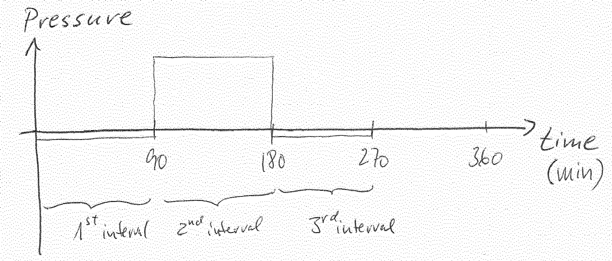

An example of the process is schematically illustrated in fig.1.

By using such an impregnating process with an impregnating agent as discussed above it is achieved that a very effective impregnation is achieved which addresses both the durability questions relating to detrimental influences of fungus and bacteria as well as weather and the fire inhibiting properties provided by DAP.

In this context it is important to remark that impregnation of Spruce and Larch has been carried out successfully. Particularly Spruce which is normally not desirable as used for construction purposes due to its relative soft structure and high content of resin. The impregnating process, as described above enters the cell and pore structure of the wood. In the process part of the resin is replaced, and as the DMDHEU chemically connects to the cellulose fibres, the cell walls are strengthened in the process. This process and the fact that DMDHEU is able to polycondensate have the effect that the water content is reduced and at the same time the DMDHEU fills out the pores and micro pores in the wood structure and in the process strengthens the cell walls. During the hardening the acetyl groups of the cellulose fibres chemically react with DMDHEU. In this process the soft tissue of Spruce and Larch is strengthened (in addition to be provided with the other advantageous features of the present invention) making it suitable for applications in which Spruce and Larch would normally be considered unsuitable. This is an important aspect as the inventive treatment according to the invention thereby provides the possibility of turning large amounts of undesirable wood (for constructive purposes) into valuable construction timber.

This composition provides a very effective fire inhibiting property which together with the DMDHEU provides the overall improvement of the wood structure. During fire testing according to EN 13823:2010 testing of various wood species obtained the best fire classification A2/B (smoke production s1, flaming d0).

### Example

An impregnating process was carried out according to the invention in the following manner:
First a liquid impregnating agent was mixed (volume approx. 71 1), comprising:
   18 weight % DMDHEU (the actual compound was Fixabret®)
   1.4 weight % Calcium carbonate binder
   15 weight % DAP (industrially available salts)
   1 weight % catalyst (citric acid)
   64.6 weight % distilled water.

Five wood logs (100x100x1000) were selected as free from knots as possible. The wood was pine tree (Spruce), grown in Northern Sweden (density at 12% moisture 430 kg/m³).

The logs were inserted into a treatment chamber in the shape of a cylindrical tank having a diameter of 800 mm and a length of 1500 mm. The treatment tank was placed in a room at a temperature of 18°C throughout the treatment.

A vacuum pump (Grundfoss) was activated after the chamber was closed, and an under-pressure of -0.5 bar was established. The under-pressure was retained for 60 min. At this time an inlet valve was opened in an upper part of the chamber and the impregnating liquid was led into the treatment chamber, substantially covering the logs. A second Grundfoss pressure pump was activated and a pressure of 9 bar was created. After approx. 60 min. the remaining impregnating liquid was drained from the chamber (stored for reuse) and an under-pressure of -0.3 bar was established and retained for approx. 60 min.

The logs were then removed and allowed to dry for 72 hours.

Upon examination, the logs were slightly yellow on their surfaces, and the geometrical measurements/dimensions were as before treatment. No twisting or bending had occurred.

During fire testing according to EN 13823:2010 the best fire classification A2/B (smoke production s1, flaming d0) was achieved.

The invention is as already mentioned above also directed to a method of applying the fire inhibiting surface treatment composition as discussed above.

It is clear that the advantages already mentioned above with respect to the substrate surface improving characteristics are also achieved when using the inventive method. During fire testing according to EN 13823:2010 testing of various wood species obtained the best fire classification A2/B (smoke production s1, flaming d0).

In this context it is important to remark that impregnation of Spruce and Larch has been carried out successfully. Particularly Spruce which is normally not desirable as used for construction purposes due to its relative soft structure and high content of resin. The impregnating process, as described above enters the cell and pore structure of the wood. In the process part of the resin is replaced, and as the the DMDHEU chemically connect to the cellulose fibres, the cell walls are strengthened in the process. This process and the fact that DMDHEU is able to polycondensate have the effect that the water content is reduced and at the same time the DMDHRU fills out the pores and micro pores in the wood structure and in the process strengthens the cell walls. During the hardening the acetyl groups of the cellulose fibres chemically react with DMDHEU. In this process the soft tissue of Spruce and Larch is strengthened (in addition to be provided with the other advantageous features of the present invention) making it suitable for applications in which Spruce and Larch would normally be considered unsuitable. This is an important aspect as the inventive treatment according to the invention thereby provides the possibility of turning large amounts of undesirable wood (for constructive purposes) into valuable construction timber.

In order to accelerate the drying step heating and/or ventilation means maybe provided such that the evaporation of water will be increased in this context it is, however, important to adjust the temperature and the speed of the ventilation air such that cracking of the wood is avoided.

The fire inhibiting liquid surface treatment composition as defined above is a colourless or substantially colourless liquid which may be coloured by adding a dye to the composition. In this connection any known dye suitable to be used with water-based paints may be included in the composition.

Furthermore, the fire inhibiting liquid surface treatment composition being substantially colourless may also be used as an undercoat such that further coats or top coats in any desired quality and colour may be applied on top of the undercoat. The normal reservations and conditions when applying multiple coats are also valid with respect to applying an extra coat or topcoat on top of the fire inhibiting liquid surface treatment composition according to the present invention.

In this context it is advised to make a test in order to ensure that the two different coats do not react in an undesirable manner, for example creating bubbles, cracks or are not able to adhere to each other.

The invention has now been explained above, but the scope of protection should only be limited to the scope of the appended claims.

## Claims

1. Fire inhibiting liquid surface treatment composition for application on substrate surfaces, comprising:
a. 5% to 30% binder ;
b. 0.1% to 15% of a catalyst where at least 50 % of the catalyst is diammonium phosphate (DAP).

2. Fire inhibiting liquid surface treatment composition according to claim 1, wherein:
c. the binder is DMDHEU (C₅H₁₀N₂O₅)
d. In addition to the DAP content in the catalyst, the catalyst further comprises magnesium chloride or a citric acid.

3. Fire inhibiting liquid surface treatment composition for application on substrate surfaces according to claim 1 or 2 wherein the composition further comprises 1% to 2% calcium carbonate binder, where said calciuim carbonate binder preferably is sodium hexametaphosphat.

4. Fire inhibiting liquid surface treatment composition for application on substrate surfaces according to any preceding claim, where the composition further comprises 1% to 5% of a siloxane.

5. Fire inhibiting liquid surface treatment composition according to claim 1 or 2 wherein the viscosity is adjusted by addition of water, such that the fire inhibiting liquid surface treatment composition may be applied to the substrate surface by one of the following application techniques: flow, by brush or roller, paintgun, airless paintgun, immersion.

6. Fire inhibiting liquid surface treatment composition according to claim 5 where when the substrate surface to be treated is wood and where 50 grams/m² to 500 grams/m² is applied.

7. Fire inhibiting liquid surface treatment composition according to any of claims 1 to 6 where a dye may be added to the liquid treatment composition.

8. Method of applying the fire inhibiting liquid surface treatment composition according to any of claims 1 to 7, said fire inhibiting liquid surface treatment composition at least comprising
5% to 30% binder;
0,1% to 5% catalyst;
the remaining amount water
where the composition is applied to a wood surface in an amount of between 50 grams to 500 grams per square meter, where the surface after application is allowed to dry for at least 24 hours up to 240 hours depending on the drying conditions.

9. Method according to claim 8 wherein the drying step may be accelerated by means of heating and/or ventilation.

10. Method according to any of claims 8 or 9 where the fire inhibiting liquid surface treatment composition is used as an undercoat before application of further coat layers or topcoats.

11. Process for impregnating wood with a fire inhibiting compound according to any of claims 1 to 7, where said process comprises the following steps:
a. A batch of wood to be treated is inserted in a treatment chamber, where after the treatment chamber is closed;
b. A first under-pressure is established inside the treatment chamber for a first time interval;
c. After the first time interval an impregnating liquid is allowed to enter the treatment chamber, said impregnating liquid covering the wood, and an over-pressure is established, and where said impregnating liquid contains between 5 to 30 weight-% binder and 0,1% to 5% of a catalyst;
d. After a second time interval the impregnating liquid is removed and a second under-pressure is established for the duration of a third time interval;
e. The wood is dried.

12. Process according to claim 11 wherein the binder is DMDHEU (C₅H₁₀N₂O₅) 1,3-dimethylol-4,5-dihydroxethylenurea, and the catalyst is DAP optionally with a content of magnesium chloride or a citric acid.

13. Process according to claim 11 wherein the wood is selected between various Pinopsida species.

14. Process according to claim 11 wherein the first under-pressure and the second under-pressure are in the range -0.1 to -1 bar and the over-pressure is in the range 5 to 15 bar, more preferred 6 bar to 12 bar and most preferred 9 bar to 11 bar.

15. Process according to claim 1 wherein
a. The first and third time intervals are selected between 1 min to 180 min;
b. The second time interval is selected between 5 to 180 min.
